# EUROPÄISCHE PATENTANMELDUNG

(11) **EP 1 671 602 A1**
(43) Veröffentlichungstag der Anmeldung: **21.06.2006**
(21) Anmeldenummer: 05027019.8
(22) Anmeldetag: 09.12.2005
(51) Int. Cl.: A61C 3/03

(54) **Schallaktivierbares Dentalinstrument**

(30) Priorität: 16.12.2004 DE 202004019458 U
(71) Anmelder: Gebr. Brasseler GmbH & Co. KG, D-32657 Lemgo (DE)
(72) Erfinder: Danger, Karl-Heinz, 32758 Detmold (DE)
(74) Vertreter: Weber, Joachim

(57) **Zusammenfassung**

Die Erfindung bezieht sich auf ein schallaktivierbares Dentalinstrument mit einem an einem Schaft befestigten Arbeitskopf, welcher, bezogen auf seinen Querschnitt, an zwei sich im Wesentlichen gegenüberliegenden Seitenbereichen mit abrasiven Partikeln belegt ist, wobei die beiden mit den abrasiven Partikeln belegten Seitenbereiche durch zumindest einen nicht belegten Seitenbereich getrennt sind.

## Beschreibung

Die Erfindung bezieht sich auf ein Dentalinstrument, welches durch Schall oder Ultraschall aktivierbar ist, wobei das Dentalinstrument einen Arbeitskopf aufweist, der an einem Schaft befestigt ist. Zumindest Teilbereiche des Arbeitskopfes sind mit abrasiven Partikeln, beispielsweise Diamantkörnern, belegt.

Derartige Instrumente, welche auch als Schallspitzen bezeichnet werden, werden üblicherweise zur Feinpräparation von Zähnen verwendet. Ein besonderes Einsatzgebiet ist dabei der Approximalbereich eines Zahnes, an welchem dieser an einem Nachbarzahn angrenzt. Bei der Feinpräparation ist es somit nicht wünschenswert, dass der Nachbarzahn von dem Dentalinstrument mitbearbeitet wird. Beschädigungen der jeweiligen Nachbarzähne sind somit auszuschließen. Aus diesem Grunde sind die aus dem Stand der Technik bekannten Dentalinstrumente oder Schallspitzen so ausgebildet, dass diese nur einseitig mit abrasivem Material belegt sind, so dass eine nicht-belegte Seite dem Nachbarzahn zugewandt ist.

Hierbei erweist es sich jedoch als nachteilig, dass der Zahnarzt bei der Präparation im Mund die durch das Dentalinstrument gebildete Instrumentenspitze wechseln muss. Das Wechseln des schallaktivierbaren Dentalinstruments ist aufwendig, da dieses über ein Gewinde verschraubt werden muss. Der Einsatz von Schnellkupplungen scheidet bei dieser Technologie aus. Somit muss der Zahnarzt in einem sehr zeitaufwendigen Arbeitsschritt ein neues Dentalinstrument einwechseln.

Der Erfindung liegt die Aufgabe zugrunde, ein Dentalinstrument der eingangs genannten Art zu schaffen, welches bei einfachem Aufbau und einfacher, kostengünstiger Herstellbarkeit unter Vermeidung der Nachteile des Standes der Technik eine optimale Anwendung ermöglicht.

Erfindungsgemäß wird die Aufgabe durch die Merkmalskombination des Hauptanspruchs gelöst, die Unteransprüche zeigen weitere vorteilhafte Ausgestaltungen der Erfindung.

Erfindungsgemäß ist somit ein Arbeitskopf oder eine Instrumentenspitze eines schallaktivierbaren Dentalinstruments geschaffen worden, welcher beidseitig wirksam ist, so dass der Zahnarzt auf einen Instrumentenwechsel verzichten kann. Durch den zumindest einen nicht mit abrasiven Partikeln belegten Seitenbereich kann dieser gegen den Nachbarzahn, welcher nicht bearbeitet werden soll, ausgerichtet werden. Beschädigungen des Nachbarzahns sind somit nicht möglich. Die beiden mit den abrasiven Partikeln belegten Seitenbereiche können somit wechselweise in Einsatz gebracht werden, um die Feinpräparation des Zahnes durchzuführen. Bei einem Kontakt mit dem Nachbarzahn wird dieser somit in keinem Falle angeschliffen und geschädigt.

In einer besonders günstigen Weiterbildung der Erfindung ist vorgesehen, dass die mit den abrasiven Partikeln belegten Seitenbereiche jeweils angeschrägt sind und auf diese Weise einen spitz zulaufenden Arbeitsbereich bilden. Hierdurch ist es möglich, auch konkave Bereiche feinsinnig zu präparieren. Besonders günstige Querschnittsformen sind dabei Trapezformen und Sechsecke.

Um den freien Endbereich des Arbeitskopfes optimal einsetzen zu können, ist es besonders günstig, wenn die mit den abrasiven Partikeln belegten Seitenbereiche am freien Endbereich des Arbeitskopfes ineinander übergehen.

Das erfindungsgemäße schallaktivierbare Dentalinstrument ist sowohl mit Ultraschall als auch mit Schall im hörbaren Bereich aktivierbar.

Im Folgenden wird die Erfindung anhand von Ausführungsbeispielen in Verbindung mit der Zeichnung beschrieben. Dabei zeigen:
- Fig. 1 und 5: jeweils Seitenansichten zweier verschiedener Ausführungsbeispiele,
- Fig. 2 und 6: jeweils rückseitige Ansichten in, bezogen auf die Fig. 1 und 5, Blickrichtung von rechts nach links,
- Fig. 3 und 7: jeweils stirnseitige Ansichten, bezogen auf eine Blickrichtung von links nach rechts gemäß den Fig. 1 und 5, und
- Fig. 4 und 8: jeweils. Schnittansichten längs der Linien A-A der Fig. 3 und 7.

Bei den Ausführungsbeispielen werden gleiche Teile jeweils mit gleichen Bezugsziffern versehen.

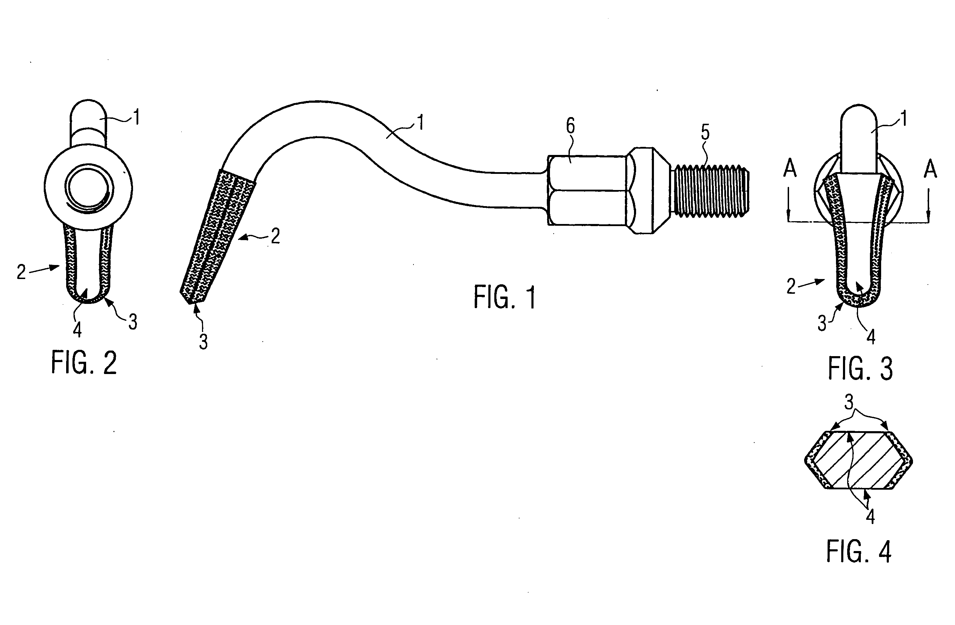

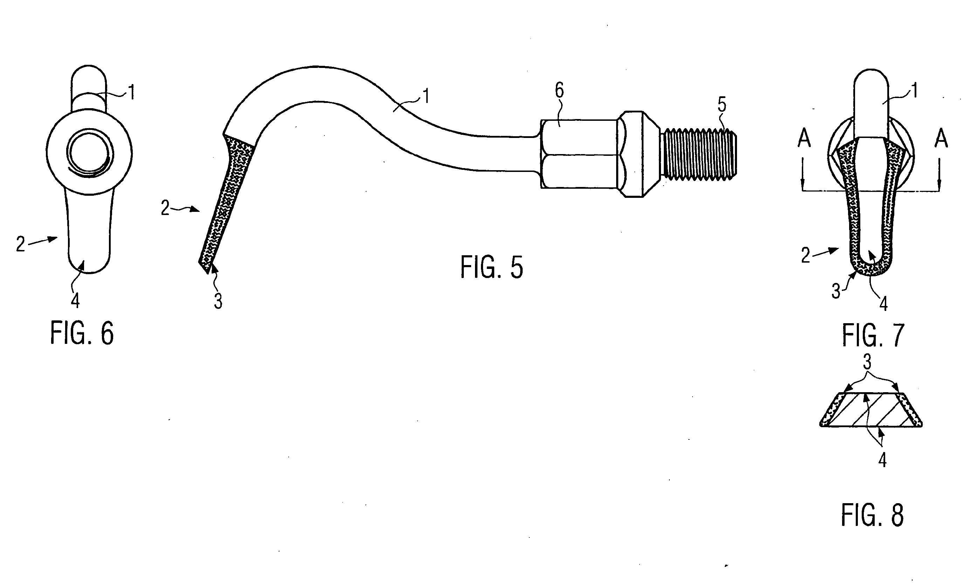

Die Fig. 1 und 5 zeigen jeweils Seitenansichten, aus welchen ersichtlich ist, dass ein geschwungener Schaft 1 einen Arbeitskopf 2 trägt. Das rückseitige Ende des Schaftes 1 ist in üblicher Weise mit einem Gewinde 5 versehen, um in ein Anschlussstück eingeschraubt zu werden. Hierzu dient ein Mehrkantbereich 6, auf welchen ein Werkzeug, beispielsweise ein Schraubenschlüssel, aufsteckbar ist.

Die drei Ausführungsbeispiele unterscheiden sich hinsichtlich der Form der Arbeitsköpfe. Diese ergibt sich als geschwungene, zungenartige Form, so wie dies in den Fig. 2, 3, 6 und 7 in der Rückansicht bzw. in der Vorderansicht dargestellt ist. Die mit abrasiven Partikeln belegten Seitenbereiche sind jeweils mit dem Bezugszeichen 3 gekennzeichnet, während die nicht mit abrasiven Partikeln belegten Seitenbereiche mit dem Bezugszeichen 4 gekennzeichnet sind.

Bei dem Ausführungsbeispiel der Fig. 1 bis 4 ist ein sechseckiger Querschnitt gewählt worden, bei welchem zwei einander gegenüberliegende, parallele Seitenbereiche (Flächen 4) nicht mit abrasiven Partikeln belegt sind, während die vier anderen Seitenflächen des Sechsecks (Seitenbereiche 3) mit abrasiven Partikeln belegt sind. Wie sich aus der Darstellung ergibt, gehen die mit abrasiven Partikeln belegten Seitenbereiche 3 am freien, vorderen Endbereich des Arbeitskopfes ineinander über (siehe insbesondere die Darstellung der Fig. 2 und 3).

Bei dem Ausführungsbeispiel der Fig. 5 bis 8 wurde eine Trapezform gewählt, bei der die beiden zueinander parallelen Seitenbereiche 4 nicht mit abrasiven Partikeln belegt sind, während die beiden anderen Seitenbereiche 3 belegt sind. Auch hierbei gehen diese am freien Endbereich (siehe Fig. 7) ineinander über.

## Patentansprüche

1. Schallaktivierbares Dentalinstrument mit einem an einem Schaft (1) befestigten Arbeitskopf (2), welcher, bezogen auf seinen Querschnitt, an zwei sich im Wesentlichen gegenüberliegenden Seitenbereichen (3) mit abrasiven Partikeln belegt ist, wobei die beiden mit den abrasiven Partikeln belegten Seitenbereiche (3) durch zumindest einen nicht belegten Seitenbereich (4) getrennt sind.

2. Dentalinstrument nach Anspruch 1, **dadurch gekennzeichnet, dass** der Arbeitskopf (2), bezogen auf seinen Querschnitt, zwei sich im Wesentlichen gegenüberliegende Seitenbereiche (4) aufweist, welche nicht mit abrasiven Partikeln belegt sind.

3. Dentalinstrument nach Anspruch 1 oder 2, **dadurch gekennzeichnet, dass** der Arbeitskopf (2), bezogen auf seinen Querschnitt, trapezförmig ausgebildet ist, wobei die beiden zueinander parallelen Seitenbereiche (4) nicht mit abrasiven Partikeln belegt sind.

4. Dentalinstrument nach Anspruch 1 oder 2, **dadurch gekennzeichnet, dass** der Arbeitskopf (2), bezogen auf seinen Querschnitt, trapezförmig ausgebildet ist, wobei der die Basis bildende Seitenbereich (4) nicht mit abrasiven Partikeln belegt ist.

5. Dentalinstrument nach Anspruch 1 oder 2, **dadurch gekennzeichnet, dass** der Arbeitskopf (2), bezogen auf seinen Querschnitt, in Form eines Sechsecks ausgebildet ist, wobei zwei zueinander parallele Seitenbereiche (4) nicht mit abrasiven Partikeln belegt sind.

6. Dentalinstrument nach einem der Ansprüche 1 bis 5, **dadurch gekennzeichnet, dass** die mit abrasiven Partikeln belegten Seitenbereiche (3) am freien Endbereich des Arbeitskopfes (2) ineinander übergehen.

7. Dentalinstrument nach einem der Ansprüche 1 bis 6, **dadurch gekennzeichnet, dass** dieses durch Schall in Schwingungen versetzbar ist.

8. Dentalinstrument nach einem der Ansprüche 1 bis 6, **dadurch gekennzeichnet, dass** dieses durch Ultraschall in Schwingungen versetzbar ist.
